# EUROPEAN PATENT APPLICATION

(11) **EP 4 421 925 A1**
(43) Date of publication of application: **28.08.2024**
(21) Application number: 23212432.1
(22) Date of filing: 27.11.2023
(51) Int. Cl.: H01M 8/04119, H01M 8/04291, H01M 8/04492, H01M 8/04828, H01M 8/04313, H01M 8/10

(54) **DRAINAGE CONTROL DEVICE OF FUEL CELL VEHICLE**

(30) Priority: 27.02.2023 JP 2023028309
(71) Applicant: Suzuki Motor Corporation, Hamamatsu-shi, Shizuoka 432-8611 (JP)
(72) Inventor: NEGISHI, Fumiyuki, Hamamatsu-shi, 432-8611 (JP)
(74) Representative: Haseltine Lake Kempner LLP

(57) **Abstract**

For the sake of draining water caused by power generation of fuel cells 11 mounted on a vehicle 100 to its outside, a drainage control device 10 includes a driving lane detection unit 26 configured to acquire the status of a road 37 and to detect a driving lane of the vehicle 100, a curve detection unit 27 configured to detect a curve-traveling degree of the vehicle 100 when the road 37 is a curve road, and a discharge control unit 28 configured to decrease an amount of drained water applied to a curve road in which the driving lane adjoins the sidewalk compared to an amount of drained water applied to a curve road in which the driving lane does not adjoin the sidewalk as long as the vehicle 100 travels along the curve road at the same curve-traveling degree.

## Description

### BACKGROUND OF THE INVENTION

### Field of the Invention

The present invention relates to technology of draining water from vehicles with fuel cells (fuel-cell vehicles).

### Description of the Related Art

Vehicles equipped with polymer-electrolyte fuel cells (i.e., fuel cells for generating power using electrochemical reaction of hydrogen of fuel and oxygen of air) (i.e., fuel-cell vehicle, FCV) are designed to travel by rotating wheels connected to electric motors driven by power generated by fuel cells. Water steam may be generated in electrochemical reaction of hydrogen and oxygen in polymer-electrolyte fuel cells. Water steam generated from fuel cells is stored in a drainage tank, and then discharged from a vehicle as its generated water at an appropriate timing. The discharge timing of the generated water from a fuel-cell vehicle should be determined for the prevention of the generated water from being splashed onto subsequently running vehicles or pedestrians walking around the circumference of a fuel-cell vehicle in such a way that the discharge timing be limited only to the timing at which a fuel-cell vehicle is traveling at a sharply curved point of a road. The technology of controlling the amount of drained water responsive to lateral acceleration of vehicles (e.g., Japanese Patent Application Publication No. 2006-176090) is known as a technique for the prevention of the generated water from being splashed onto any pedestrian walking along a sidewalk adjoining a driving lane at a sharply curved point of a road.

However, an operation for controlling the amount of drained water only counting the lateral acceleration of a fuel-cell vehicle may cause a fear of losing an appropriate control of the amount of drained water from a fuel-cell vehicle counting the existence of subsequently running vehicles or pedestrians. This is because it is possible to measure different distances between a fuel-cell vehicle and any pedestrian as to whether the driving lane of a fuel-cell vehicle is curved in a righthand direction or a lefthand direction.

### SUMMARY OF THE INVENTION

The present invention is made in consideration of the above circumstances, and therefore the present invention aims to provide a drainage control device for the prevention of the drained water from being splashed onto subsequently running vehicles or pedestrians when a fuel-cell vehicle is running along a curve road.

According to the present embodiment, a drainage control device is configured to drain water caused by power generation of fuel cells mounted on a vehicle to the outside of the vehicle, wherein the drainage control device includes a driving lane detection unit configured to acquire the status of a road for the vehicle to travel along and to detect a driving lane of the road for the vehicle to travel in, a curve detection unit configured to detect a curve-traveling degree of the vehicle when the road is a curve road, and a discharge control unit, when the road is the curve road having a sidewalk in its periphery, configured to decrease an amount of drained water applied to a second road shape in which the driving lane adjoins the sidewalk compared to an amount of drained water applied to a first road shape in which the driving lane does not adjoins the sidewalk as long as the vehicle travels in the driving lane at the same curve-traveling degree.

In the above, the curve-traveling degree may be calculated based on lateral acceleration applied to the vehicle.

The curve-traveling degree may be calculated based on the shape of the road.

The discharge control unit may change the amount of drained water responsive to the inter-vehicular distance between the vehicle and its subsequently following vehicle in the driving lane.

The discharge control unit may further degrease the amount of drained water when a pedestrian walks along the sidewalk.

The discharge control unit may prevent the drained water from being discharged to the outside of the vehicle until the stored amount of water generated by fuel cells becomes equal to or above a predetermined amount.

The discharge control unit may prevent the drained water from being discharged to the outside of the vehicle when the vehicle travels at the traveling speed equal to or below the predetermined speed.

When the vehicle travels along the road serving as an automobile road, the discharge control unit may maintain the same amount of drained water from the vehicle at the same curve-traveling degree.

When the vehicle travels along the curve road having an opposite lane outside the traveling lane, the discharge control unit may degrease an amount of drained water counting an oncoming vehicle in the opposite lane compared to an amount of drained water not counting the oncoming vehicle in the opposite lane.

### EFFECT OF THE INVENTION

According to the present invention, it is possible to prevent the drained water from being splashed onto a subsequently traveling vehicle or a pedestrian when a fuel-cell vehicle discharge water when traveling along a curve road.

### BRIEF DESCRIPTION OF THE DRAWINGS

Fig. 1 is a block diagram showing the configuration of a fuel-cell vehicle using a drainage control device according to the embodiment of the present invention.
Fig. 2A is a schematical drawing showing a lefthand curve road on a two-lane road having one lane on one side.
Fig. 2B is a schematic drawing showing a righthand curve road on a two-lane road having one lane on one side.
Fig. 3 is a schematic drawing showing a righthand curve road on a four-lane road having two lanes on one side.
Fig. 4 is a flowchart showing the operation of the drainage control device according to the embodiment of the present invention.

### DETAILED DESCRIPTION

Hereinafter, the embodiment of the present invention will be described with reference to the accompanying drawings.

In the present embodiment, directions such as "front", "rear", and "side" are defined in view of a driver of a fuel-cell vehicle. The term of "pedestrian" may cover any person riding on various types of vehicles movable with partly exposing a human body outside such as bicycles, kickboards, baby cars, and wheelchairs, in addition to any person walking along sidewalks in meaning.

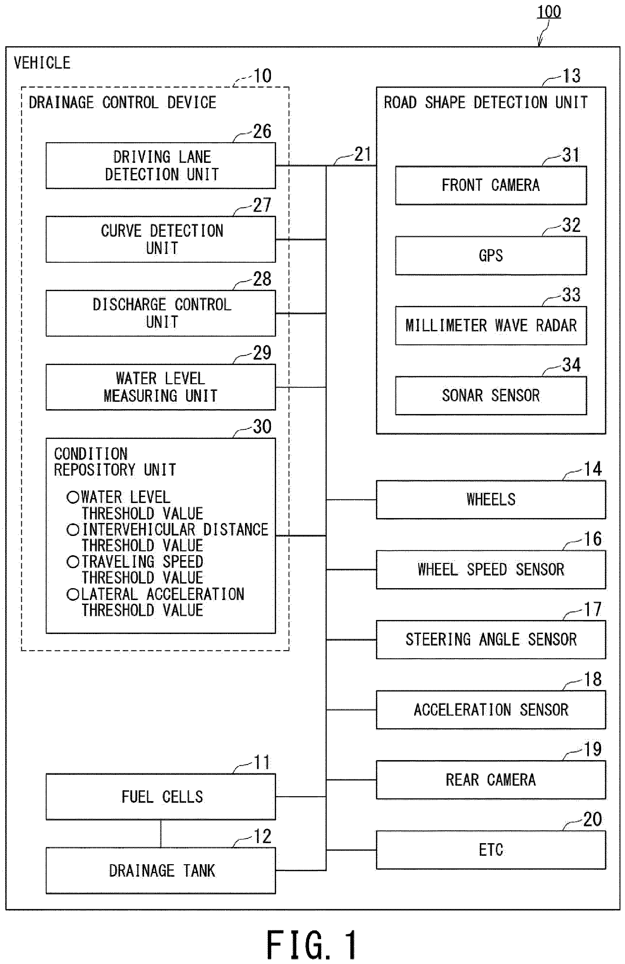

A vehicle 100 using a drainage control device 10 according to the present embodiment will be described in detail with reference to Fig. 1.

The vehicle is a fuel-cell vehicle (FCV) using fuel cells 11 as its driving source. For example, the fuel cells 11 are configured of fuel-cell stacks produced by layering a plurality of single cell units each including an electrolyte membrane made of high-polymer molecules tightly held between two electrodes. Among two electrodes, a negative electrode is supplied with hydrogen while a positive electrode is supplied with oxygen. The fuel cells 11 generate power via electrochemical reaction between hydrogen and oxygen in the air while generating water steam. Thereafter, water steam is cooled down to generated water. The generated water is temporarily stored in a drainage tank 12 and then discharged outside the vehicle 100 by the drainage control device 10 at an appropriate timing. The generated water discharged from the vehicle 100 will be referred to as "drained water". In addition, an event of discharging the drained water outside the vehicle 100 will be referred to as "drainage". For example, the drainage tank 12 is connected to a water pipe whose drain outlet is disposed in the vicinity of front-rear wheels 14 while being directed downwardly or rearwardly. The drainage control device 10 controls the amount of drained water by opening or closing a drain valve (not shown), which is disposed at an appropriate position of a water pipe inside the drainage tank 12 or in the downstream side of drainage, or by adjusting the opening of the drain valve.

As shown in Fig. 1, the drainage control device 10 is connected to a plurality of constitutional parts 11-20 via an in-vehicle network 21. Specifically, the drainage control device 10 is connected in an information exchangeable manner to the fuel cells 11, the drainage tank 12, a rode shape detection unit 13, wheels 14, a wheel speed sensor 16, a steering angle sensor 17, an acceleration sensor 18, a rear camera 19, and an ETC (Electronic Toll Collection system) 20 via the in-vehicle network 21.

The drainage control device 10 includes a plurality of functional parts 26-30. Specifically, the drainage control device 10 includes a driving lane detection unit 26, a curve detection unit 27, a discharge control unit 28, a water level measuring unit 29, and a condition repository unit 30.

The condition repository unit 30 is configured to store various types of threshold values constituting conditions for the drainage control device 10 to control drainage, such as water level threshold values, inter-vehicular distance threshold values, traveling speed threshold values, and lateral acceleration threshold values. In this connection, the drainage control device 10 may store various pieces of information, relating to various types of threshold values stored in the condition repository unit 30, separately in the functional parts 26-29.

Next, the functional parts 26-29 of the drainage control device 10 and the constitutional parts 11-20 connected to the drainage control device 10 will be described in detail.

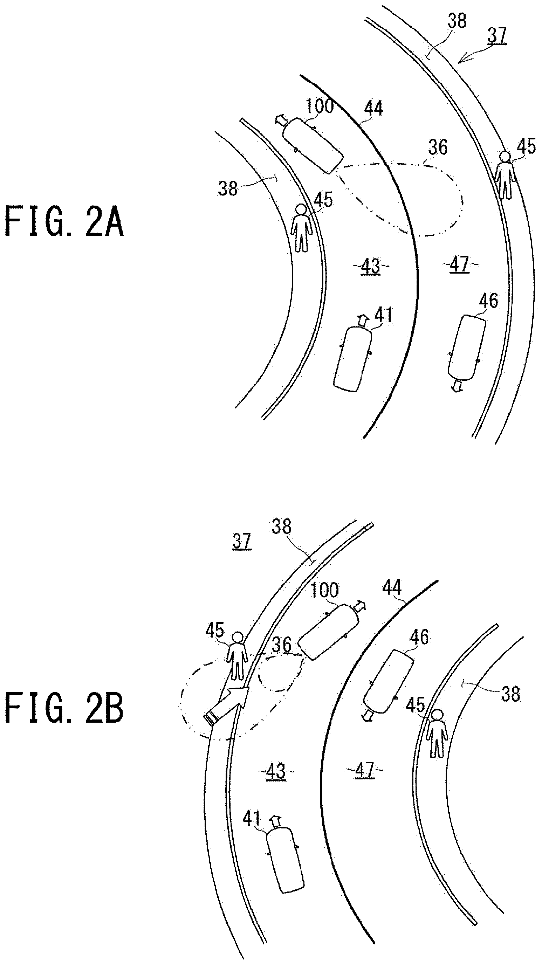

The road shape detection unit 13 is configured to detect the shape of a road 37 on which the vehicle 100 is traveling (see Figs. 2A, 2B). For example, the road shape detection unit 13 can be configured of a front camera 31 attached to the front portion of the vehicle 100 and directed forwardly from the vehicle 100; however, this is not a restriction. It is sufficient for the road shape detection unit 13 to detect the width of the road 37 on which the vehicle 100 is currently traveling, the existence/nonexistence of a sidewalk 38 (see Figs. 2A, 2B), a road shape, the number of lanes, a distinction about whether the road 37 is an automobile road or not, and a distinction about whether the road 37 is a one-way road or not. The road shape detection unit 13 may adopt a GPS (Global Positioning System) 32 using artificial satellites or a millimeter wave radar 33. In addition, the road shape detection unit 13 may adopt a sonar sensor 34 combined with the GPS 32 or the millimeter wave radar 33. Normally, the sonar sensor 34 is attached to each of four corners of the vehicle 100. The sonar sensor 34 is configured to calculate a distance toward an obstacle positioned in a direction of four corners from the vehicle 100. Normally, the millimeter wave radar 33 may be attached to the center of the rear portion of the vehicle 100, thus calculating a distance from the millimeter wave radar 33 to a subsequently following vehicle 41.

The driving lane detection unit 26 is configured to detect the status of the road 37 on which the vehicle 100 is traveling from data such as images detected by the road shape detection unit 13. The driving lane detection unit 26 acquires the status of the road 37 indicates the width of the road 37, which can be acquired by the road shape detection unit 13, the existence/nonexistence of the sidewalk 38, the road shape, the number of lanes, a distinction as to an automobile lane or not, and a distinction as to a one-way road or not. The driving lane detection unit 26 is configured to detect the driving lane 43 on which the vehicle 100 is currently traveling according to data acquired by the road shape detection unit 13.

The curve detection unit 27 is configured to detect a curve-traveling degree of the vehicle 100 which is traveling along a curve road. For example, the curve-traveling degree is lateral acceleration applied to the vehicle 100. The lateral acceleration is acceleration exerted to the vehicle 100 in its lateral direction when the vehicle 100 is turning around. The language of the lateral acceleration may consistently include centripetal acceleration in meaning as well. The centripetal acceleration can be defined as acceleration exerted in a center direction of turnaround of the vehicle 100 at its center of gravity. The lateral acceleration of the vehicle 100 has a property of being increased when the vehicle 100 is traveling at high speed even in a curve road having a small curvature, i.e., a gentle curve road. When draining water from the vehicle 100 having high lateral acceleration, the splashing distance of the drained water will be increased in a centrifugal direction.

In this connection, the curve-traveling degree may not strictly match the lateral acceleration. For example, the curve-traveling degree may represent any similar indexes of lateral acceleration, which can be calculated based on the traveling speed of the vehicle 100 calculated from readings of the wheel speed sensor 16 and the shape of the road 37 acquired by the driving lane detection unit 26. Alternatively, the curve-traveling degree may represent the curvature of a curve road.

The lateral acceleration can be calculated based on data obtained from the wheel speed sensor 16, the steering angle sensor 17, the acceleration sensor 18, and the like. The wheel speed sensor 16 is configured to measure the revolving speed of the wheels 14 of the vehicle 100. The steering angle sensor 17 is configured to measure an angle of steering a handle by a driver. The acceleration sensor 18 is configured to measure acceleration applied to the vehicle 100.

The discharge control unit 28 is configured to control the amount of discharging the generated water discharged outside from the vehicle 100 by adjusting the opening of a drain valve connected to the drainage tank 12 at the timing when the vehicle 100 is going to travel along a curve road. As described above, the splashing distance of the drained water to be discharged in a centrifugal direction, i.e., a circumferential direction of a curve road, will be increased to be larger as the curve-traveling degree is increased to be higher. For this reason, the discharge control unit 28 may control the opening of a drain valve to decrease the amount of drained water to be smaller as the curve-traveling degree is increased to be higher. For example, it is possible to divide numerical values each representing the amount of drained water into a plurality of segments according to lateral-acceleration threshold values serving as curve-traveling degrees stored in the condition repository unit 30. In this case, the discharge control unit 28 may determine the amount of drained water as defined in the segment which the lateral acceleration of the vehicle 100 belongs to.

Even at the same curve-traveling degree, the discharge control unit 28 may change the amount of drained water depending on a distinction about whether the vehicle 100 is currently traveling in the driving lane 43 adjoining the sidewalk 38 or not. That is, when the road 37 is a curve road having the sidewalk 38 in its periphery, the discharge control unit 28 may discharge water such that an amount of drained water applied to the traveling lane 43 adjoining the sidewalk 38 will be decreased to be smaller than an amount of drained water applied to the driving lane 43 not adjoining the sidewalk 38. When the vehicle 100 is traveling along a curve road, the vehicle's front portion is deflected to a road centerline 44 due to the lateral acceleration applied to the vehicle 100 while the vehicle's rear portion is deflected to the sidewalk 38 apart from the road centerline 44. This is because a drainage area 36 for discharging water to the sidewalk 38 from the vehicle's rear portion is oriented toward the sidewalk 38 due to the centrifugal force applied to the vehicle 100. This may cause a fear that the drained water may be splashed to a pedestrian 45 walking on the sidewalk 38.

Figs. 2A and 2B show patterns assuming curve roads having sidewalks laid aside driving lanes.

Fig. 2A shows a lefthand curve of the rode 37 serving as a two-lane road having one lane on one side.

Fig. 2B shows a righthand curve of the road 37 serving as a two-lane road having one lane on one side.

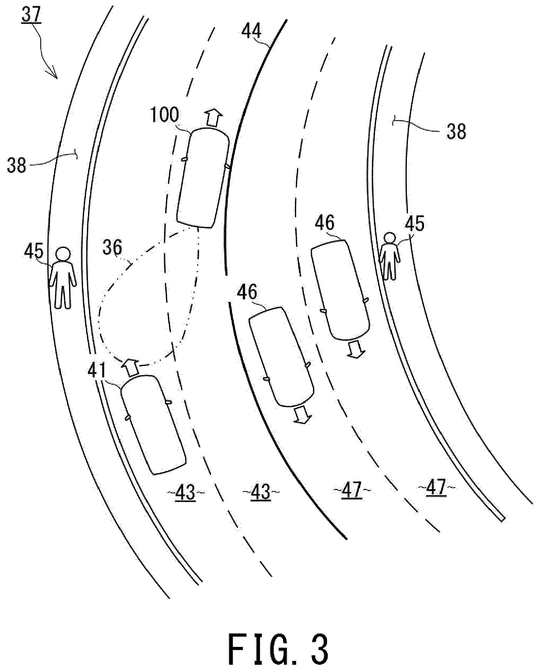

Fig. 3 shows a righthand curve of the road 37 serving as a four-lane road having two lanes on one side.

In Japan, the lefthand traffic system has been stipulated for vehicles, and therefore the patterns as shown in Figs. 2A-2B and Fig. 3 can be assumed as the positional relationship between the vehicle 100 traveling along a lefthand or righthand curve road and the pedestrians 45 walking on the sidewalk 38. Countries or regions stipulating righthand traffic for vehicles should reverse the positioning of driving lanes and curves in a lefthand or righthand direction.

As shown in Fig. 2A, the lefthand curve of the two-lane road having one lane on one side may have a relatively large distance from the vehicle 100 to the pedestrian 45 on the sidewalk 38, and therefore the discharge control unit 28 can control a drain valve of the drainage tank 12 of the vehicle 100, thus discharging a large amount of drained water. However, a lefthand curve may cause a fear that the drained water might be splashed onto an oncoming vehicle 46 traveling in an opposite lane 47 which is opposite to the driving lane 43 for the vehicle 100 to travel in. For this reason, the discharge control unit 28 may appropriately decrease the amount of discharging the generated water responsive to the distance or the relative speed between the vehicle 100 and the oncoming vehicle 46. Specifically, when a curve road is curved such that the opposite lane 47 is positioned in the outer periphery of the driving lane 43, the vehicle 100 traveling in the driving lane 43 might come across the oncoming vehicle 46 traveling in the opposite lane 47 in proximity to the rear portion of the vehicle 100. In this case, the discharge control unit 28 may decrease the amount of drained water to be smaller than the amount of drained water of the vehicle 100 not coming across the oncoming vehicle 46 irrespective of the same curve-traveling degree. For example, the distance or the relative speed between the vehicle 100 and the oncoming vehicle 46 can be calculated based on measured values produced by appropriately combining the front camera 31, the millimeter wave radar 33, the sonar sensor 34, the wheel speed sensor 16, and the like.

The discharge control unit 28 may change the amount of drained water responsive to the inter-vehicular distance between the vehicle 100 and its subsequently following vehicle 41 in the driving lane 43. Upon failing to secure an adequate inter-vehicular distance between the vehicle 100 and the subsequently following vehicle 41, the discharge control unit 28 may inhibit the drained water from being discharged from the drainage tank 12. That is, it is possible to provide an inter-vehicular threshold value serving as a lower-limit threshold value with respect to the inter-vehicular distance between the vehicle 100 and its subsequently following vehicle 41. In other words, the discharge control unit 28 may limit the drainage timing to the condition of securing a sufficiently large inter-vehicular distance between the vehicle 100 and its subsequently following vehicle 41 above the inter-vehicular threshold value. In this connection, the distance between the vehicle 100 and its subsequently following vehicle 46 can be calculated based on measured values produced by appropriately combining the front camera 31, the millimeter wave radar 33, the sonar sensor 34, the wheel speed sensor 16, and the like.

As shown in Fig. 2B, the righthand curve of the two-lane road having one lane on one side includes the driving lane 43 serving as a sidewalk adjoining lane in which the sidewalk 38 is positioned in the outer periphery of a curve road, a relatively small distance can be taken from the vehicle 100 to the pedestrian 45 in the sidewalk 38. This may cause a fear that the drained water from the vehicle 100 might be splashed onto the pedestrian 45. For this reason, in a righthand curve of the two-lane road having one lane on one side, the discharge control unit 28 may determine the amount of discharging the generated water as a smaller amount of drained water selected from among multiple amounts of drained water defined by the same curve-traveling degree. That is, the discharge control unit 28 may decrease the amount of drained water in a righthand curve of the two-lane road having one lane on one side rather than a lefthand curve of the two-lane road having one lane on one side.

In the four-lane road having two lanes on one side as shown in Fig. 3, which is shaped in a similar manner of a righthand curve road shown in Fig. 2B, for example, it is possible to secure a relatively large distance between the vehicle 100 and the pedestrian 45 to be equal to or above the width of one lane. In this case, it is possible for the discharge control unit 28 to discharge the drained water from the drainage tank 12 without decreasing the amount of drained water.

Normally, automobile roads are not provided with any sidewalk. When the vehicle 100 is traveling along an automobile, the driving lane 43 for the vehicle 100 to travel along does not adjoin the sidewalk 38. For this reason, it is unnecessary to provide any difference in the amount of drained water at the same curve-traveling degree. This is because it is unnecessary to pay attention to the pedestrians 45 in automobile roads. A decision as to whether or not the vehicle 100 is traveling along an automobile road can be made based on the car-navigation information from the GPS 32 and/or the road information from the ETC 20.

In addition, it is preferable for the discharge control unit 28 to further decrease the amount of drained water upon recognizing the existence of the pedestrian 45 in the sidewalk 38 according to images sent from the front camera 31.

Upon detecting a curve-traveling degree above a certain value, it is preferable for the discharge control unit 28 not to discharge the drained water when the vehicle 100 makes a right turn or a left turn at an intersection or when the vehicle 100 just starts to move out from a parking area. In the neighborhood of an intersection or a parking area, it is highly likely that any other vehicle might travel in proximity to the vehicle 100 or that the pedestrian 45 might pass by the vehicle 100, causing a fear that the drained water from the vehicle 100 be splashed onto any other vehicle or the pedestrian 45. For this reason, when the traveling speed of the vehicle 100 is equal to or below the predetermined vehicle speed threshold value, it is preferable for the discharge control unit 28 to inhibit the drained water from being discharged from the drainage tank 12.

The discharge control unit 28 is configured to determine the drainage timing based on the water level of the drainage tank 12 obtained from the water level measuring unit 29. This is because the machine lifetime of a drain valve would be reduced in the vehicle 100 configured to repeatedly discharge the drained water every time it travels along a curve road irrespective of the water level of the drainage tank 12 lower than the predetermined water level threshold value.

The functional parts 26-30 of the drainage control device 10 can be realized by a computer including a processor such as CPU (Central Processing Unit) and GPU (Graphics Processing Unit) as well as a semiconductor storage device such as ROM (Read-Only Memory) and RAM (Random-Access Memory) or a storage device such as HDD (Hard-Disk Drive).

In the drainage control device 10, the functions of the driving lane detection unit 26, the curve detection unit 27, the discharge control unit 28, and the water level measuring unit 29 can be realized by a processor executing predetermined programs stored in the semiconductor storage device and/or the storage device.

Instead of the software processing, it is possible to realize the functionality of the drainage control device 10 using hardware such as ASIC (Application Specified Integration Circuit) and FPGA (Field-Programmable Gate Array).

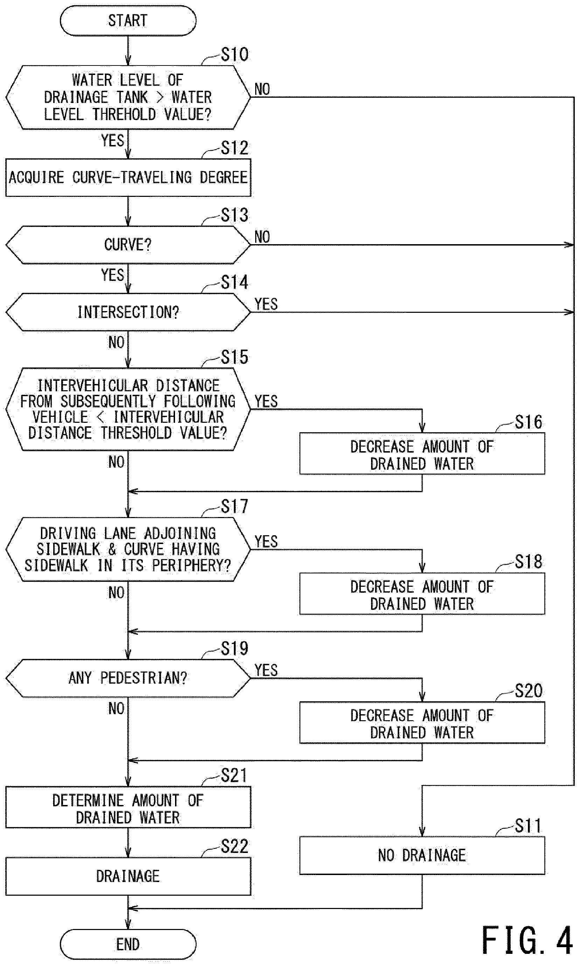

Next, the operation of the drainage control device 10 will be descried with reference to the flowchart of Fig. 4 (i.e., steps S10 through S22). Fig. 4 shows a drainage control process (or a drainage control program) of the drainage control device 10. In the following descriptions, the term "step" will be omitted as necessary.

As shown in Fig. 9, the discharge control unit 28 does not discharge the drained water from the drainage tank 12 until the water level of the drainage tank 12 reaches the water level threshold value (when NO in S10, the flow proceeds to S11). After the step S11, the drainage control device 10 exits the drainage control process.

When the water level of the drainage tank 12 reaches the water level threshold value, the curve detection unit 27 measures a curve-traveling degree (when YES in S10, the flow proceeds to S12). In this connection, the curve detection unit 27 may normally measure curve-traveling degrees irrespective of whether or not the water level of the drainage tank 12 is equal to or above the water level threshold value.

The condition in which the curve-traveling degree is not equal to or not above a predetermined value may indicates that the road 37 would extend straightforward approximately since its curve road has a gentle curve or that the vehicle 100 is traveling at low speed (i.e., NO in S13). In this case, the vehicle 100 does not discharge the drained water from the drainage tank 12 (i.e., when NO in S13, the flow proceeds to S11). This is because centrifugal force is not applied to the drained water from the drainage tank 12, which may cause a fear that the drained water might be splashed onto the subsequently following vehicle 41. After the step S11, the discharge control device 10 exits the discharge control process.

When the curve-traveling degree is equal to or above the predetermined value, it is determined whether or not the vehicle 100 traveling along a curve road may make a left turn or a right turn at an intersection (i.e., when YES in S13, the flow proceeds to S14).

When the vehicle 100 traveling along a curve road makes a left turn or a right turn, the discharge control unit 28 does not discharge the drained water from the drainage tank 12 (i.e., when YES in S14, the flow proceeds to S11). For example, it is possible to determine whether or not the vehicle 100 is located at an intersection according to the existence/nonexistence of a crosswalk, the existence/nonexistence of signals, the existence/nonexistence of any pedestrian crossing roads to be identified in images captured by the front camera 31. After the step S11, the drainage control device 10 exits the drainage control process.

On the other hand, when the vehicle 100 traveling along a curve road does not make a left turn or a right turn, it is possible to determine that the vehicle 100 is traveling along a curve road (i.e., NO in S14). In this case, the discharge control unit 28 is configured to acquire the inter-vehicular distance between the vehicle 100 and its subsequently following vehicle 41 via the rear camera 19, the millimeter wave radar 33, the sonar sensor 34, or the like (S15).

When the inter-vehicular distance between the vehicle 100 and its subsequently following vehicle 41 is smaller than the inter-vehicular distance threshold value, the discharge control unit 28 decreases the amount of drained water from the drainage tank 12 (i.e., when YES in S15, the flow proceeds to S16, S17). When the inter-vehicular distance between the vehicle 100 and its subsequently following vehicle 41 is smaller than the minimum value of the inter-vehicular distance threshold value, the drainage control unit 28 inhibits the drained water from being discharged from the drainage tank 12. This operation aims to prevent the drained water from being splashed onto the subsequently following vehicle 41. When the inter-vehicular distance between the vehicle 100 and its subsequently following vehicle 41 is equal to or above the inter-vehicular distance threshold value, the discharge control unit 28 does not decrease the amount of drained water from the drainage tank 12 (i.e., when NO in S15, the flow proceeds to S17).

The discharge control unit 28 decreases the amount of drained water from the drainage tank 12 when the vehicle 100 is traveling in the driving lane 43 adjoining the sidewalk 38 serving as a sidewalk adjoining lane while the curve road is curved together with the sidewalk 38 adjoined to the outer periphery (i.e., when YES in S17, the flow proceeds to S18, S19). The discharge control unit 28 does not decrease the amount of drained water from the drainage tank 12 upon failing to satisfy either a condition that the vehicle 100 is traveling in the driving lane 43 serving as a sidewalk adjoining lane or a condition that the curve road is curved together with the sidewalk 38 adjoined to the outer periphery (i.e., when NO in S17, the flow proceeds to S19).

When the pedestrian 45 walks in the sidewalk 38, the discharge control unit 28 decreases the amount of drained water from the drainage tank 12, thus determining the amount of drained water (i.e., when YES in S19, the flow proceeds to S20, S21). On the other hand, when no pedestrian 45 walks in the sidewalk 38, the discharge control unit 28 immediately determines the amount of drained water without decreasing the amount of drained water from the drainage tank 12 (i.e., when NO in S19, the flow proceeds to S21). Thus, the discharge control unit 28 discharge the drained water from the drainage tank 12 with the amount of drained water determined as described above (S22). After the step S22, the drainage control device 10 exits the drainage control process.

In the drainage control device 10 according to the present embodiment as described above, it is possible to prevent the drained water from being splashed onto the subsequently following vehicle 41 or the pedestrian 45 when the vehicle 100 traveling along a curve road attempts to discharge the drained water.

The present invention has been described above with reference to various examples; however, the foregoing embodiment is illustrative and does not aim to limit the scope of the invention. The embodiment can be practiced in other various forms; hence, the present invention can be realized by omissions, replacements, and changes of parts as well as any combinations of parts within a range not departing from the gist of the invention. As the embodiment and its modifications can be embraced within the scope and gist of the invention, the embodiment and its modifications can be embraced within the invention defined in claims and its equivalents.

For example, the present embodiment has been described with respect to an exemplar case in which the vehicle 100 is traveling along the road 37 under the lefthand traffic system; however, the drainage control device and its drainage control program according to the present invention can be applied to the vehicle 100 traveling along roads under the righthand traffic system. In addition, the present embodiment has been described with respect to exemplar cases of two-lane roads having one lane on one side and four-lane roads having two lanes on one side; however, the present invention can be applied to any other road shape having six lanes or more. The drainage control device and its drainage control program according to the present invention are capable of appropriately determining the amount of generated water from fuel-cell vehicles running along roads under the one-way traffic system. In this connection, the drawings illustrate four-wheel vehicles; however, it is unnecessary to limit vehicles driven by power generated from fuel cells to four-wheel vehicles; hence, it is possible to think of two-wheel vehicles or three-wheel vehicles.

### REFERENCE SIGNS LIST

- 10: drainage control device
- 11: fuel cells
- 12: drainage tank
- 13: road shape detection unit
- 14: wheels
- 16: wheel speed sensor
- 17: steering angle sensor
- 18: acceleration sensor
- 19: rear camera
- 20: ETC
- 21: in-vehicle network
- 26: driving lane detection unit
- 27: curve detection unit
- 28: discharge control unit
- 29: water level measuring unit
- 30: condition repository unit
- 31: front camera
- 32: GPS
- 33: millimeter wave radar
- 34: sonar sensor
- 36: drainage area
- 37: road
- 38: sidewalk
- 41: subsequently following vehicle
- 43: driving lane
- 44: road centerline
- 45: pedestrian
- 46: oncoming vehicle
- 47: opposite lane
- 100: vehicle

## Claims

1. A drainage control device configured to drain water caused by power generation of fuel cells mounted on a vehicle to an outside of the vehicle, comprising:
a driving lane detection unit configured to acquire a status of a road for the vehicle to travel along and to detect a driving lane of the road for the vehicle to travel in;
a curve detection unit configured to detect a curve-traveling degree of the vehicle when the road is a curve road; and
a discharge control unit, when the road is the curve road having a sidewalk in its periphery, configured to decrease an amount of drained water applied to a second road shape in which the driving lane adjoins the sidewalk compared to an amount of drained water applied to a first road shape in which the driving lane does not adjoins the sidewalk as long as the vehicle travels in the driving lane at a same curve-traveling degree.

2. The drainage control device according to claim 1, wherein the curve-traveling degree is calculated based on lateral acceleration applied to the vehicle.

3. The drainage control device according to claim 1 or 2, wherein the curve-traveling degree is calculated based on a shape of the road.

4. The drainage control device according to any preceding claim, wherein the discharge control unit is configured to change the amount of drained water responsive to an inter-vehicular distance between the vehicle and its subsequently following vehicle in the driving lane.

5. The drainage control device according to any preceding claim, wherein the discharge control unit is configured to further degrease the amount of drained water when a pedestrian walks along the sidewalk.

6. The drainage control device according to any preceding claim, wherein the discharge control unit is configured to prevent the drained water from being discharged to the outside of the vehicle until a stored amount of water generated by the fuel cells becomes equal to or above a predetermined amount.

7. The drainage control device according to any preceding claim, wherein the discharge control unit is configured to prevent the drained water from being discharged to the outside of the vehicle when the vehicle travels at traveling speed equal to or below predetermined speed.

8. The drainage control device according to any preceding claim, wherein when the vehicle travels along the road serving as an automobile road, the discharge control unit is configured to maintain a same amount of drained water from the vehicle at the same curve-traveling degree.

9. The drainage control device according to any preceding claim, wherein when the vehicle travels along the curve road having an opposite lane outside the traveling lane, the discharge control unit is configured to degrease an amount of drained water counting an oncoming vehicle in the opposite lane compared to an amount of drained water not counting the oncoming vehicle in the opposite lane.
